# EUROPÄISCHE PATENTSCHRIFT

(11) **EP 1 331 382 B1**
(45) Veröffentlichungstag und Bekanntmachung des Hinweises auf die Patenterteilung: **03.09.2008**
(21) Anmeldenummer: 02020985.4
(22) Anmeldetag: 20.09.2002
(51) Int. Cl.: F02D 13/02, F02D 41/00

(54) **Verfahren, Computerprogramm und Steuer und/oder Regelgerät zum Betreiben einer Brennkraftmaschine, sowie Brennkraftmaschine**
Method, computer programme, control and/or regulation device for operation of an internal combustion engine and internal combustion engine
Procédé, programme informatique et appareil de commande et/ou regulation destinés à l'utilisation d'un moteur à combustion interne, et moteur à combustion interne

(30) Priorität: 24.01.2002 DE 10202840; 11.09.2002 DE 10242115
(43) Veröffentlichungstag der Anmeldung: 30.07.2003
(73) Patentinhaber: ROBERT BOSCH GMBH, 70442 Stuttgart (DE)
(72) Erfinder: Mallebrein, Georg, 70825 Korntal-Muenchingen (DE)

(56) Entgegenhaltungen:
- EP-A- 0 450 332
- US-A- 4 703 734
- US-A- 5 143 037
- US-A- 5 347 962
- US-A- 6 055 948
- PATENT ABSTRACTS OF JAPAN Bd. 005, Nr. 087 (M-072), 6. Juni 1981 (1981-06-06) & JP 56 034914 A (NISSAN MOTOR CO LTD), 7. April 1981 (1981-04-07) & JP 56 034914 A (NISSAN MOTOR CO LTD) 7. April 1981 (1981-04-07)

## Beschreibung

### Stand der Technik

Die Erfindung betrifft zunächst ein Verfahren zum Betreiben einer Brennkraftmaschine mit mindestens einem Einlassventil, dessen Betrieb mindestens durch die Parameter Öffnungswinkel, Schließwinkel, Ventilhubkurve und Phasenlage der Ventilhubkurve beschrieben werden kann, und bei dem mindestens einer der Parameter kontinuierlich verstellt und ein anderer Parameter stufenweise geschaltet werden kann.

Ein solches Verfahren ist vom Markt her bekannt. Eine entsprechende Brennkraftmaschine verfügt über eine sog. "variable Ventilsteuerung". Derartige variable Ventilsteuerungen haben den Vorteil, dass vor allem bei Brennkraftmaschinen, welche auch mit hohen Drehzahlen betrieben werden können, die Forderung nach geringen Abgasemissionen und niedrigem Verbrauch sowohl bei hohen Drehzahlen (im maximalen Leistungsbereich) als auch bei mittleren Drehzahlen (im Bereich des besten Drehmoments) und schließlich noch bei niedrigen Drehzahlen gut erfüllt werden können.

Üblicherweise werden die Einlassventile von Brennkraftmaschinen von einer Nockenwelle betätigt. Durch diese werden bei einem bestimmten "Öffnungswinkel" bzw. einem bestimmten "Schließwinkel" der Kurbelwelle der Brennkraftmaschine das entsprechende Einlassventil geöffnet bzw. geschlossen. Die Ventilhubkurve wird, wenn das Einlassventil von einer Nockenwelle betätigt wird, durch die Form des Nockens bestimmt. Die Phasenlage der Ventilhubkurve wird üblicherweise ebenfalls auf den zylinderindividuellen Winkel der Kurbelwelle der Brennkraftmaschine bezogen und hängt von der Winkelstellung der Nockenwelle gegenüber der Kurbelwelle ab.

Aus dem Stand der Technik sind verschiedene Arten der variablen Ventilsteuerung bekannt. So ist es möglich, die Nockenwelle währen des Betriebs der Brennkraftmaschine bei Bedarf um ihre Längsachse gegenüber der Kurbelwelle zu verdrehen. Die Verdrehung der Nockenwelle ist stufenlos zwischen zwei Endstellungen möglich. Hierdurch kann die Phasenlage der Ventilhubkurve stufenlos zwischen zwei Endstellungen verändert werden.

Möglich ist auch, eine Nockenwelle, welche Nocken mit einem sich in axialer Richtung der Nockenwelle verändernden Profil aufweist, in Längsrichtung zu verschieben. Auf diese Weise können sämtliche oben genannten Parameter verändert werden.

Ferner gibt es Nockenwellen, bei welchen zur Steuerung eines Einlassventils nicht nur ein Nockenprofil, sondern zwei paarweise angeordnete Nockenprofile vorhanden sind. Durch eine Verschiebung einer solchen Nockenwelle in ihrer Längsrichtung kann zwischen den zwei durch den jeweiligen Nocken vorgegeben Ventilhubkurven gewählt werden.

Bei einer solchen Umschaltung von einer Ventilhubkurve auf eine andere stellt sich das Problem, dass sich, ohne entsprechende Gegenmaßnahmen, verschiedene Zustandsgrößen der Verbrennung in dem Brennraum und in der Folge auch das Drehmoment der Brennkraftmaschine schlagartig ändern können. Wird beispielsweise von einer Ventilhubkurve mit großem Ventilhub auf eine Ventilhubkurve mit kleinem Ventilhub umgeschaltet, gelangt schlagartig weniger Frischluft in den Brennraum, was wiederum ein entsprechendes "Ruckeln" der Brennkraftmaschine zur Folge hat.

Damit kein solch plötzlicher Drehmomentsprung der Brennkraftmaschine auftritt, werden bisher die Hubumschaltung, die Ansteuerung einer Drosselklappe der Brennkraftmaschine, die Ausgabe eines Zündwinkels und die Einspritzung von Kraftstoff in den Brennraum mit hohem Aufwand synchronisiert.

Die Steuerung dieser Synchronisierung benötigt eine möglichst genaue Kenntnis des Umschaltzeitpunktes, welcher bei einem hydraulischen Verstellsystem und hier insbesondere bei kaltem Öl deutlich gegenüber der Ansteuerung selbst verzögert sein kann. Darüber hinaus ist auch die Diagnose eines solchen Systems sehr aufwändig. Sie ist erforderlich, da eine falsche Schaltstellung (beispielsweise auch nur eines Zylinders) zu Aussetzern oder ungewollten Beschleunigungen bzw. Verzögerungen der Brennkraftmaschine führen kann. Dies ist darüber hinaus auch schon bei kleinen und mittleren Drehzahlen möglich.

Aus der US 5,347,962 ist ein Ventilmechanismus einer Brennkraftmaschine bekannt, der mindestens zwei Ventilhubkurven für jedes Einlass- oder Auslassventil umfasst. Eine Ventilhubkurve ist derart geformt, dass sie wesentliche Kraftstoffeinsparcharakteristik aufweist. Die andere Ventilhubkurve ist derart geformt, dass der Motor ein höheres Drehmoment bei vergleichsweise niedriger oder hoher Motordrehzahl erzeugt. Beim Umschalten der Ventilhubkurve wird wenigstens eine der Ventilhubkurven einer Phasenänderung unterworfen bevor oder nach dem aktuellen Umschalten der Ventilhubkurve. Als Ergebnis wird ein unerwünschter Schock beim Umschalten der Ventilhubkurve vermieden oder reduziert.

Die vorliegende Erfindung hat die Aufgabe, ein Verfahren der eingangs genannten Art so weiterzubilden, dass der Synchronisier- und Diagnoseaufwand verringert werden kann oder sogar ganz wegfällt.

Diese Aufgabe wird bei einem Verfahren der eingangs genannten Art dadurch gelöst, dass vor einer Umschaltung des stufenweise schaltbaren Parameters der kontinuierlich verstellbare Parameter so eingestellt wird, dass sich beim Umschalten des stufenweise schaltbaren Parameters mindestens eine Zustandsgröße der Verbrennung eines dem Einlassventil zugeordneten Brennraums nicht oder nicht wesentlich ändert.

### Vorteile der Erfindung

Erfindungsgemäß wurde erkannt, dass bei der Vielzahl der Parameter, welche die Betätigung des Einlassventils beschreiben, ähnliche oder sogar gleiche Verbrennungszustände im Brennraum mit unterschiedlichen Parameterkombinationen erzielt werden können. In der Folge ermöglicht die kontinuierliche Verstellmöglichkeit des einen Parameters, diesen so einzustellen, dass eine Veränderung des schaltbaren Parameters keine oder keine wesentliche Auswirkung auf eine oder mehrere Zustandsgrößen der Verbrennung in dem Brennraum hat.

Wenn die drehmomentrelevanten Verbrennungsparameter im Brennraum von der Umschaltung jedoch nicht oder nicht wesentlich betroffen sind, kann auf eine aufwändige Synchronisierung beispielsweise des Zündzeitpunktes, des Einspritzzeitpunktes und der Drosselklappenstellung mit dem Umschaltvorgang des schaltbaren Parameters und auf die Diagnose dieser Synchronisierung verzichtet werden. Die Brennkraftmaschine kann daher preiswerter hergestellt werden.

Vorteilhafte Weiterbildungen der Erfindung sind in Unteransprüchen angegeben.

In einer ersten Weiterbildung wird vorgeschlagen, dass die Zustandsgröße der Verbrennung eine Frischluftfüllung und/oder einen Verbrennungsschwerpunkt umfasst. Diese beiden Parameter haben einen besonders wesentlichen Einfluss auf das Drehmoment der Brennkraftmaschine.

Vorgeschlagen wird auch, dass es sich bei dem stufenweise schaltbaren Parameter um die Ventilhubkurve handelt, derart, dass sich die unterschiedlichen Ventilhubkurven mindestens durch den jeweiligen Maximalhub unterscheiden, und dass es sich bei dem kontinuierlich verstellbaren Parameter um die Phasenlage der Ventilhubkuren handelt.

Bei diesen beiden Parametern handelt es sich einerseits um jene Parameter, die einen besonders starken Einfluss auf die Verbrennung im Brennraum haben und mit denen daher die allgemeinen Vorteile einer variablen Ventilsteuerung besonders gut realisiert werden können. Darüber hinaus können diese Parameter technisch vergleichsweise einfach verändert werden.

Besonders vorteilhaft ist es, wenn der Schließwinkel des Einlassventils bei gleicher Phasenlage bei allen Ventilhubkurven in etwa gleich ist und die Umschaltung der Ventilhubkurve nur bei niedrigen Drehzahlen erfolgt. Grundgedanke dieser Weiterbildung ist die Tatsache, dass insbesondere bei niedrigen Drehzahlen der Schließzeitpunkt bzw. Schließwinkel des Einlassventils auf die Frischluftfüllung im Brennraum großen Einfluss hat. Somit kann dann, wenn die Umschaltung der Ventilhubkurve nur bei niedrigen Drehzahlen erfolgt, diese weitgehend unabhängig von der Phasenlage der Ventilhubkurve erfolgen. Dieses Verfahren ist daher besonders einfach zu realisieren.

Dabei ist es sehr vorteilhaft, wenn zum Zeitpunkt der Umschaltung der Ventilhubkurve keine oder keine wesentliche Ventilüberschneidung zwischen dem Einlassventil und einem Auslassventil vorliegt. Hierdurch wird bewirkt, dass beim Umschalten der Ventilhubkurve sich ein aufgrund einer internen Abgasrückführung im Brennraum befindlicher Restgasanteil nicht wesentlich ändert. Bei einem gegebenen Zündwinkel ändert sich so der Verbrennungsschwerpunkt und in der Folge das Drehmoment der Brennkraftmaschine nur wenig.

In vorteilhafter Ausgestaltung des erfindungsgemäßen Verfahrens wird dabei auch vorgeschlagen, dass eine Ventilhubkurve mit kleinerem Maximalhub in etwa mittig innerhalb einer Ventilkurve mit größerem Maximalhub angeordnet ist, und dass die Umschaltung von einer Ventilhubkurve zu einer anderen bei einer späten Phasenlage der Ventilhubkurven erfolgt, bei der mit beiden Ventilhubkurven in etwa die gleiche Frischluftfüllung im Brennraum erreicht wird.

Hierdurch wird der Tatsache Rechnung getragen, dass bei einem Gleichsetzen der Schließwinkel der einzelnen Einlassventil-Hubkurven u.U. keine ausreichende Frühverschiebung der Hubkurve mit kleinem Maximalhub möglich ist. Oft kann jedoch nur durch eine solche starke Frühverschiebung das Kraftstoffeinsparpotential, welches aus der entsprechenden Entdrosselung resultiert, optimal genutzt werden. Allerdings sind einer Frühverschiebung einer Ventilhubkurve durch die Kollisionsgefahr mit dem sich im Brennraum bewegenden Kolben Grenzen gesetzt: Wenn fälschlicherweise von einer Hubkurve mit kleinem Maximalhub auf eine Hubkurve von großem Maximalhub geschaltet werden würde und die Hubkurven stark nach "früh" verschoben wären, könnte eine solche Kollisionsgefahr des Einlassventils mit dem Kolben bestehen, welche unweigerlich zu einem Schaden an der Brennkraftmaschine führen würde.

Die vorgeschlagene Ausgestaltung des erfindungsgemäßen Verfahrens ermöglicht es, die Phasenlage der Ventilhubkurve mit kleinem Maximalhub ausreichend nach "früh" zu verschieben, und gleichzeitig die Phasenlage der Ventilhubkurve mit großem Maximalhub bei "spät" zu belassen. So wird die die Gefahr einer Kollision des Einlassventils mit dem Kolben bei einem fälschlichen Umschalten auf eine Ventilhubkurve mit großem Maximalhub reduziert. Um dennoch beim Umschalten keinen Drehmomentsprung zu erzeugen, erfolgt dieses bei einer vergleichsweise späten Phasenlage und bei einem solchen Kurbelwinkel, bei dem mit beiden Ventilhubkurven in etwa die gleiche Frischluftfüllung im Brennraum erreicht wird.

Möglich ist auch, dass eine Mehrzahl von Einlassventilen pro Brennraum vorhanden ist und eine der Ventilhubkurven mindestens eines dieser Einlassventile den maximalen Hub Null aufweist. Im Grunde wird durch eine solche Ventilhubkurve entsprechende Einlassventil abgeschaltet.

Alternativ zu der eingangs genannten Lösung wird erfindungsgemäß auch vorgeschlagen, dass der Schließwinkel des Einlassventils bei allen Ventilhubkurven in etwa gleich ist und die Umschaltung von einer Ventilhubkurve zur anderen nur bei niedrigen Drehzahlen erfolgt. Diese Variante des erfindungsgemäßen Verfahrens ist besonders einfach und preiswert realisierbar.

Die Erfindung betrifft auch ein Computerprogramm, welches zur Durchführung des obigen Verfahrens geeignet ist, wenn es auf einem Computer ausgeführt wird. Dabei wird besonders bevorzugt, wenn das Computerprogramm auf einem Speicher, insbesondere auf einem Flash-Memory, abgespeichert ist.

Die Erfindung betrifft auch ein Steuer- und/oder Regelgerät zum Betreiben einer Brennkraftmaschine. Es wird besonders bevorzugt, wenn das Steuer- und/oder Regelgerät einen Speicher umfasst, auf dem ein Computerprogramm der obigen Art abgespeichert ist.

Ferner betrifft die Erfindung eine Brennkraftmaschine, welche ein Steuer- und/oder Regelgerät der obigen Art umfasst.

### Zeichnung

Nachfolgend werden besonders bevorzugte Ausführungsbeispiele der vorliegenden Erfindung unter Bezugnahme auf die beiliegende Zeichnung im Detail erläutert. In der Zeichnung zeigen:
- Figur 1: eine schematische Darstellung einer Brennkraftmaschine mit einem Einlassventil, welches von einer schalt- und verstellbaren Nockenwelle angesteuert wird;
- Figur 2: zwei Nocken eines Nockenpaares der Nockenwelle von Figur 1 bei unterschiedlichen Winkelstellungen der Nockenwelle und die dazugehörige Stellung eines Stößels des Einlassventils von Figur 1;
- Figur 3: ein Diagramm, in dem die durch die beiden Nocken von Figur 2 bewirkten Hubkurven des Einlassventils von Figur 1 dargestellt sind;
- Figur 4: ein Diagramm, in dem die Ventilhubkurven von Figur 2 bei unterschiedlichen Phasenlagen der Nockenwelle gegenüber einer Kurbelwelle aufgetragen sind;
- Figur 5: ein Diagramm ähnlich Figur 4 einer Variante der Ventilhubkurven;
- Figur 6: eine gestreckte Darstellung eines Bereichs der Kurven von Figur 5;
- Figur 7: ein Diagramm, in dem eine durch die Ventilhubkurven von Figur 6 bewirkte Luftfüllung bei unterschiedlichen Phasenlagen der Nockenwelle dargestellt ist; und
- Figur 8: ein Flussdiagramm, welches ein Verfahren zum Umschalten von einem Nocken zum anderen der Nockenwelle darstellt, zeigt.

### Beschreibung der Ausführungsbeispiele

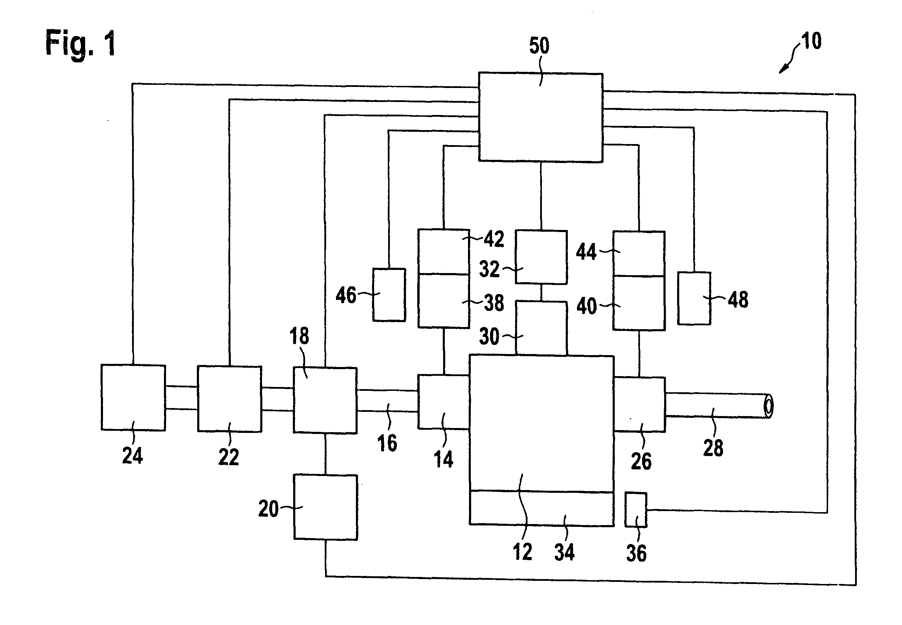

In Figur 1 trägt eine Brennkraftmaschine insgesamt das Bezugszeichen 10. Sie umfasst mehrere Zylinder, von denen in Figur 1 nur einer dargestellt ist, welcher einen Brennraum 12 umfasst. Diesem wird Verbrennungsluft über ein Einlassventil 14 und ein Ansaugrohr 16 zugeführt. Ein Injektor 18 spritzt Kraftstoff in das Ansaugrohr 16 ein. Der Kraftstoff wird von einem Kraftstoffsystem 20 bereitgestellt. Eine Drosselklappe 22 ermöglicht eine Verengung des Querschnitts des Ansaugrohrs 16. Die Luftmasse, welche vom Ansaugrohr 16 angesaugt wird, wird von einem HFM-Sensor 24 erfasst.

Die Verbrennungsabgase werden aus dem Brennraum 12 über ein Auslassventil 26 in ein Abgasrohr 28 abgeführt. Ein sich im Brennraum 12 befindliches Kraftstoff-Luft-Gemisch wird von einer Zündkerze 30 gezündet, die wiederum von einem Zündsystem 32 angesteuert wird. Ein nicht dargestellter Kolben ist über ein ebenfalls nicht dargestelltes Pleuel mit einer symbolisch dargestellten Kurbelwelle 34 verbunden. Deren Winkelstellung und Drehzahl wird von einem Sensor 36 abgegriffen.

Das Einlassventil 14 wird von einer Einlassnockenwelle 38 und das Auslassventil 26 von einer Auslassnockenwelle 40 betätigt. Durch Aktoren 42 und 44 können die Nockenwellen 38 und 40 in noch näher dazustellender Art und Weise verstellt werden. Die aktuelle Winkelstellung der Einlassnockenwelle 38 wird von einem Sensor 46 erfasst. Die aktuelle Winkelstellung der Auslassnockenwelle 40 wird von einem Sensor 48 erfasst.

Der Betrieb der Brennkraftmaschine 10 wird von einem Steuer- und Regelgerät 50 gesteuert bzw. geregelt. Dieses ist eingangsseitig mit dem HFM-Sensor 24, dem Kurbelwellensensor 36 und den Nockenwellensensoren 46 und 48 verbunden. Ausgangsseitig ist das Steuer- und Regelgerät 50 mit dem Injektor 18, der Drosselklappe 22, dem Zündsystem 32 und den Aktoren 42 und 44 der Nockenwellen 38 und 40 verbunden.

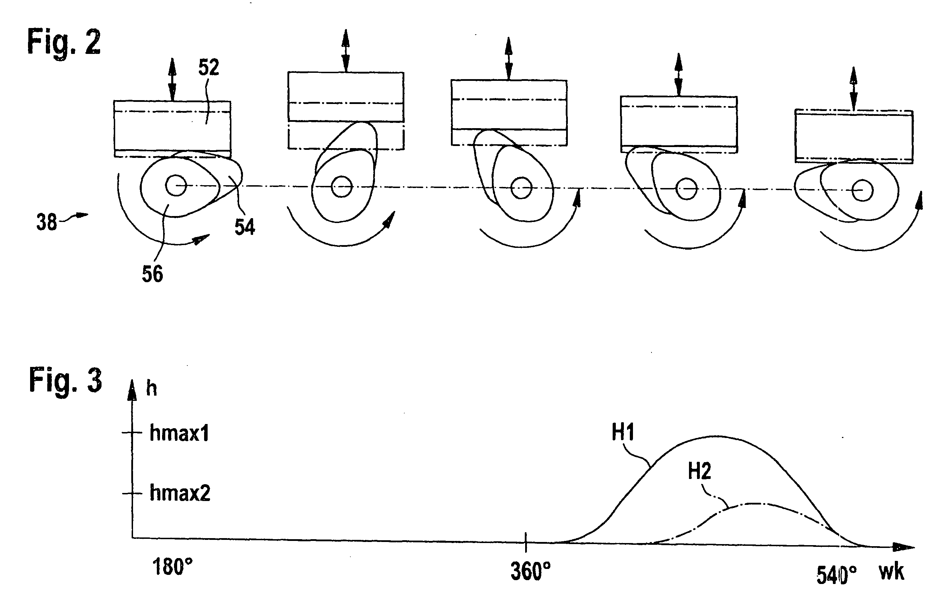

In Figur 2 ist die Einlassnockenwelle 38 von Figur 1 und ein in Figur 1 nicht dargestellter Stößel 52 des Einlassventils 14 dargestellt. Figur 2 umfasst insgesamt fünf einzelne Darstellungen der Einlassnockenwelle 38 bei unterschiedlichen Winkelstellungen. Der Einfachheit halber ist nur eines der dargestellten Bilder mit entsprechenden Bezugszeichen versehen.

Aus Figur 2 ist ersichtlich, dass die Einlassnockenwelle 38 pro Einlassventil 14 mit zwei paarweise angeordneten Nocken 54 und 56 ausgestattet ist. Durch eine Verschiebung der Einlassnockenwelle 38 in ihrer Längsrichtung, welche durch einen der Aktoren 42 bewirkt werden kann, arbeitet entweder der Nocken 54 oder der Nocken 56 auf den Stößel 52. Die Hubkurve des Nockens 54 ist in Figur 3 mit H1, die Hubkurve des Nockens 56 in Figur 3 mit H2 bezeichnet. Die Position des Stößels 52, welche durch den Nocken 54 bewirkt wird, ist in Figur 2 mit durchgezogenen Linien, jene Position, die durch den Nocken 56 bewirkt wird, strichpunktiert dargestellt.

Man erkennt aus Figur 3, dass der maximale Hub hmax1 des Stößels 52, welcher durch den Nocken 54 bewirkt wird, etwa doppelt so groß ist wie der maximale Hub hmax2, welcher durch den Nocken 56 bewirkt wird. Man erkennt auch, dass das Einlassventil 14, wenn der Stößel 52 vom Nocken 56 beaufschlagt wird, später öffnet als in jenem Fall, in dem der Stößel 52 vom Nocken 54 beaufschlagt wird. Schließlich ist aus Figur 3 ersichtlich, dass der Schließwinkel des Einlassventils 14 bei beiden Hubkurven H1 und H2 immer gleich ist. Dem liegt folgende Überlegung zugrunde:

Variable Ventilsteuerzeiten haben den Vorteil, dass die Forderungen nach geringen Abgasemissionen und niedrigem Verbrauch in allen Drehzahlbereichen besser erfüllt werden können als bei nicht variablen Ventilsteuerungen. Eine einfache Möglichkeit, die Steuerzeiten des Einlassventils 14 zu verändern, besteht darin, dass der Stößel 52 entweder durch den Nocken 54 oder den Nocken 56 betätigt wird und so die unterschiedlichen Hubkurven H1 bzw. H2 von Figur 3 realisiert werden können. Dabei muss jedoch darauf geachtet werden, dass beim Umschalten von einer Hubkurve zur anderen sich das Drehmoment aufgrund der Umschaltung nicht schlagartig ändert.

Es wurde nun erkannt, dass bei niedrigen Drehzahlen die in den Brennraum 12 gelangende Luftfüllung auch bei unterschiedlichen Hubkurven dann in etwa gleich ist, wenn der Schließzeitpunkt der Ventilhubkurven gleich ist. Die im Brennraum 12 vorhandene Luftfüllung ist jedoch für das Drehmoment, welches die Brennkraftmaschine 10 leistet, ein maßgeblicher Parameter. Wenn also, wie dies bei den beiden Hubkurven H1 und H2 in Figur 3 der Fall ist, der Schließzeitpunkt des Einlassventils 14 bei beiden Ventilhubkurven H1 und H2 in etwa gleich ist, kann davon ausgegangen werden, dass zumindest bei niedrigen Drehzahlen beim Umschalten von einer Ventilhubkurve zur anderen keine schlagartige Änderung des von der Brennkraftmaschine 10 geleisteten Drehmoments auftritt.

Ein gleichzeitiger Schließzeitpunkt des Einlassventils 14 kann dadurch realisiert werden, dass die beiden Nocken 54 und 56, wie aus Figur 2 ersichtlich ist, so gestaltet und starr so zueinander angeordnet sind, dass die entsprechenden Ventilhubkurven H1 und H2 immer zu einem von der gewählten Hubkurve H1 oder H2 unabhängigen und gleichen Schließwinkel des Einlassventils 14 führen. Vorteilhaft kann sich sogar ein geringfügig späteres Schließen des Einlassventils 14 bei Verwendung der Hubkurve H2 (kleinerer Maximalhub) gegenüber der Verwendung der Hubkurve H1 (größerer Maximalhub) auswirken. Hierdurch kann der Füllungsverlust, welcher durch den kleineren Hub bei einer bestimmten Drehzahl vorhanden ist, kompensiert werden.

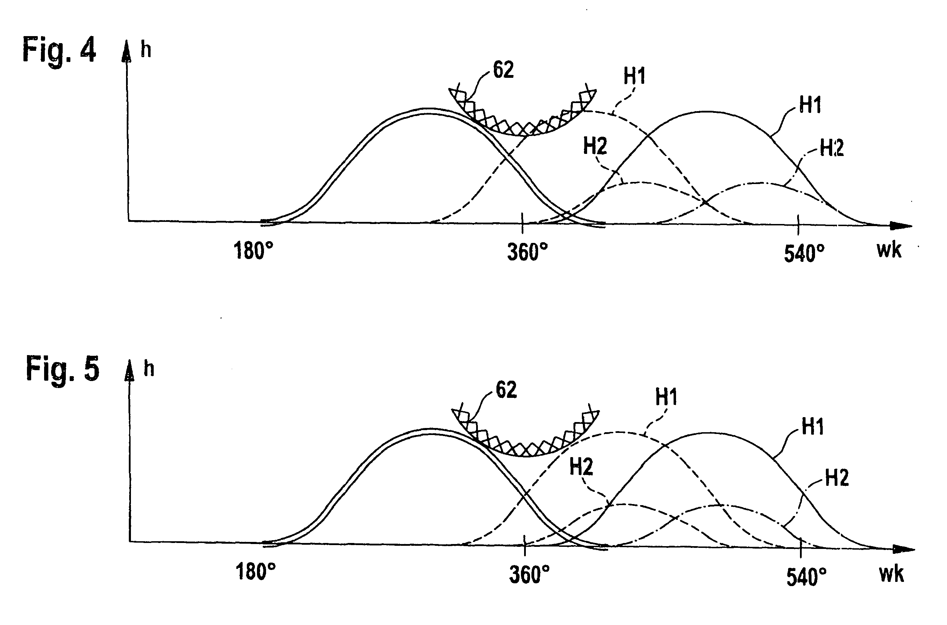

Die in dem in den Figuren 2 und 3 dargestellten Ausführungsbeispiel vorhandene Gleichzeitigkeit der Schließwinkel des Einlassventils 14 bei den beiden Ventilhubkurven H1 und H2 hat, wie aus Figur 4 ersichtlich ist, in bestimmten Fällen jedoch einen Nachteil. In bestimmten Fällen ist es nämlich vorteilhaft, die Steuerzeiten des Einlassventils 14 nicht nur dadurch zu variieren, dass von einer Ventilhubkurve auf eine andere geschaltet wird, sondern dass auch die Phasenlage der Ventilhubkurven gegenüber dem Kurbelwellenwinkel verändert wird. Diese Phasenverschiebung kann technisch einfach in kontinuierlicher Weise, also ohne Zwischenstufen, durch eine Verdrehung der Einlassnockenwelle 38 gegenüber der Kurbelwelle 34 erfolgen. Eine solche Verdrehung führt also zu einer Phasenverschiebung der Nockenwelle 38 gegenüber der Kurbelwelle 34.

Um das volle Kraftstoffeinspar- und Emissionsoptimierungspotential einer variablen Ventilsteuerung ausnutzen zu können, sollte beispielsweise dann, wenn die Ventilhubkurve H2 mit kleinem Maximalhub verwendet wird, der Zeitpunkt des Öffnens des Einlassventils 14 möglichst im Bereich des oberen Totpunkts des Kolbens, also ungefähr bei 360° Kurbelwellenwinkel wk, liegen. Um dies zu erreichen, wird die Phasenlage der Einlassnockenwelle 38 nach "früh" verschoben (vergl. Figur 4; in dieser sind die Ventilhubkurven mit später Phasenlage mit durchgezogenen (H1) bzw. strichpunktierten (H2) Linien, die Ventilhubkurven H1 und H2 mit früher Phasenlage gestrichelt, und eine Ventilhubkurve des Auslassventils 26 mit einer Doppellinie dargestellt).

Grundsätzlich muss jedoch immer der Fall einkalkuliert werden, dass es aufgrund eines Fehlers im Steuergerät 50 zu einer irrtümlichen Umschaltung von der kleinen Ventilhubkurve H2 mit kleinem Maximalhub zu der Ventilhubkurve H1 mit großem Maximalhub kommt. Bei der in Figur 4 gestrichelt dargestellten frühen Phasenlage der Ventilhubkurve H2 und bei gleichzeitigem Schließwinkel beider Ventilhubkurven H1 und H2 könnte es bei einer derartigen irrtümlichen Umschaltung zu einer Kollision des Einlassventils 14 mit dem Kolben kommen (die Hubkurve des Kolbens trägt in Figur 4 das Bezugszeichen 62).

Um eine solche Kollision des Ventilelements des Einlassventils 14 mit dem Kolben des Brennraums 12 bei einem irrtümlichen Umschalten von einer Hubkurve zur anderen zu vermeiden, ist es günstiger, wenn die beiden Hubkurven H1 und H2 zueinander die in Figur 5 dargestellte Phasenlage aufweisen. Diese "relative" Phasenlage der Ventilhubkurven H1 und H2 ist so gewählt, dass die Hubkurve H2 mit kleinem Maximalhub ungefähr mittig zur Hubkurve H1 mit großem Maximalhub liegt.

Selbst bei einer frühen "absoluten", also auf den Kurbelwinkel wk bezogenen Phasenlage der Hubkurve H2 mit kleinem Maximalhub - dies entspricht einem Öffnungswinkel im Bereich des oberen Totpunkts des Kolbens - würde dann ein irrtümliches Umschalten von der Hubkurve H2 mit kleinem Maximalhub zu der Hubkurve H1 mit großem Maximalhub zu keiner Kollision des Ventilelements des Einlassventils 14 mit dem Kolben der Brennkraftmaschine 10 führen (Kurve 62 in Figur 5).

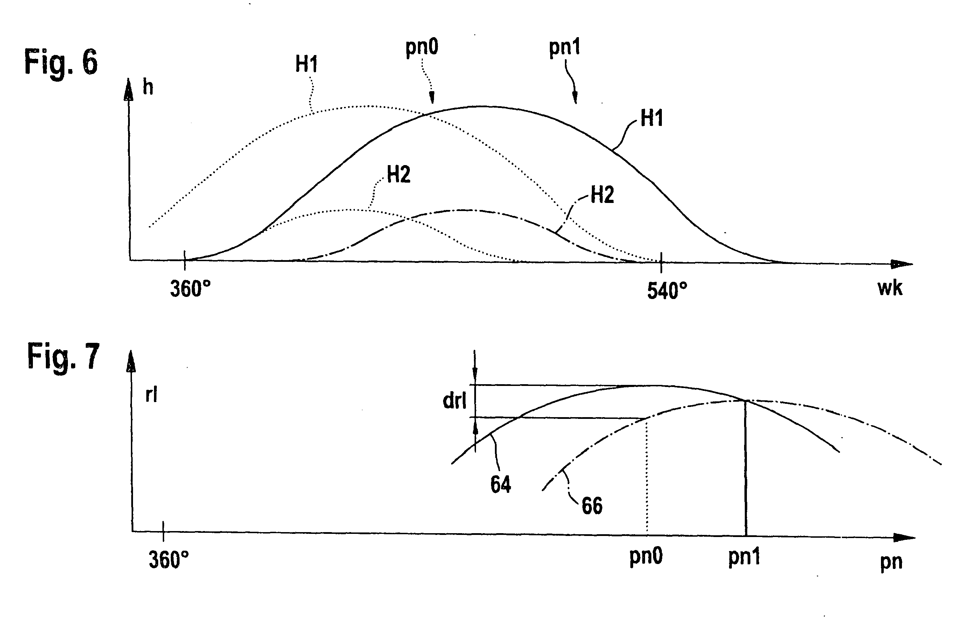

Da nun jedoch der Schließwinkel der Hubkurve H2 mit kleinem Maximalhub sich von dem Schließwinkel der Hubkurve H1 mit großem Maximalhub unterscheidet, muss ein anderer Weg gefunden werden, um sicherzustellen, dass bei einem Umschalten von einer Hubkurve auf die andere keine unerwünschte Änderung des Drehmoments der Brennkraftmaschine 10 eintritt. Hierzu wird nun auf die Figuren 6 und 7 verwiesen:

In Figur 6 ist der Winkelbereich zwischen 360° und 540° des Kurbelwellenwinkels wk des Diagramms von Figur 5 vergrößert dargestellt. Gepunktet sind die Ventilhubkurven H1 und H2 bei einem Phasenwinkel der Einlassnockenwelle 38 dargestellt, welcher einem Wert pn0 entspricht. Es handelt sich hierbei um einen Phasenwinkel der Einlassnockenwelle 38, welcher einer deutlichen Verstellung der Einlassnockenwelle 38 nach "früh" entspricht.

In Figur 7 ist die Luftfüllung rl des Brennraums 12 dargestellt, welcher bei den unterschiedlichen Hubkurven H1 und H2 bei unterschiedlichen Phasenwinkeln der Einlassnockenwelle 38 erzielt wird. Jene Luftfüllungskurve, welche mit der Hubkurve H1 erzielt wird, trägt in Figur 7 das Bezugszeichen 64 und ist durchgezogen dargestellt, jene Luftfüllungskurve, welche mit der Hubkurve H2 (kleiner Maximalhub) erzielt wird, trägt in Figur 7 das Bezugzeichen 66 und ist strichpunktiert dargestellt.

Man erkennt, dass bei einer "absoluten" Phasenlage pn0 der Einlassnockenwelle 38 die Luftfüllung im Brennraum 12, welche mit der Hubkurve H1 (großer Maximalhub) erzielt wird, deutlich größer ist als jene Luftfüllung, welche bei gleicher Phasenlage pn0 mit der Hubkurve H2 (kleiner Maximalhub) erzielt werden kann. Die Differenz dieser Luftfüllung rl ist in Figur 7 als drl bezeichnet. Eine solche Differenz drl in der Luftfüllung rl würde jedoch zu einem unerwünschten Drehmomentsprung der Brennkraftmaschine 10 führen.

Man sieht aber auch aus Figur 7, dass bei einer Verstellung der Phasenlage pn der Einlassnockenwelle 38 nach "spät" die mit der Hubkurve H2 (kleiner Maximalhub) im Brennraum 12 erzielbare Luftfüllung ansteigt, wohingegen jene Luftfüllung, welche mit der Hubkurve H1 (großer Maximalhub) in den Brennraum 12 eingebracht werden kann, abnimmt. Die Luftfüllungskurve 64 schneidet die Luftfüllungskurve 66 bei einer Phasenlage der Einlassnockenwelle 38, die den Wert pn1 hat. Dies bedeutet, dass dann, wenn vor einer Umschaltung von einer Hubkurve auf die andere die Phasenlage pn der Einlassnockenwelle 38 auf den Wert pn1 eingestellt wird, bei der Umschaltung von einer Hubkurve auf eine andere trotz ungleicher Schließwinkel der beiden Hubkurven H1 und H2, ein unerwünschter Drehmomentsprung der Brennkraftmaschine 10 nicht auftritt.

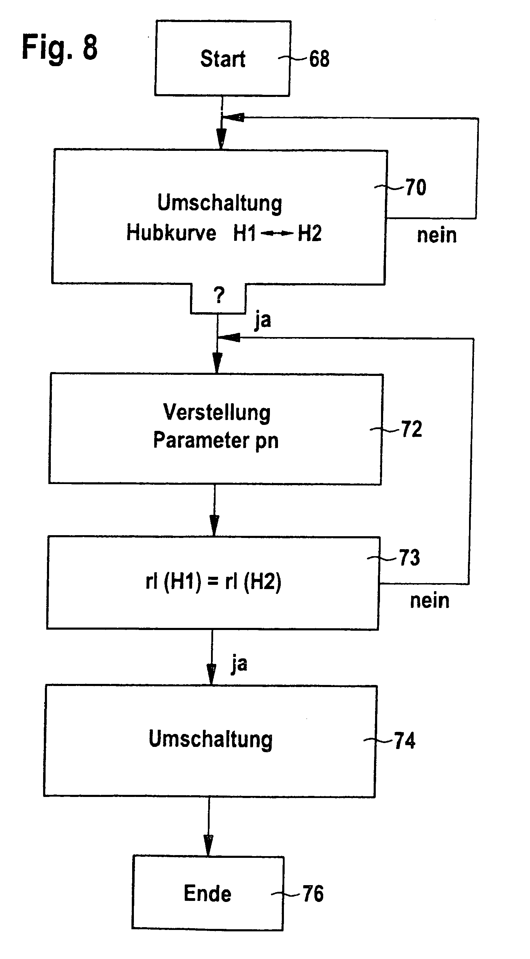

Ein entsprechendes Verfahren ist als Flussdiagramm in Figur 8 dargestellt: Nach einem Startblock 68 wird in einem Block 70 geprüft, ob von einer Hubkurve H1 auf eine andere Hubkurve H2 umgeschaltet werden soll. Wenn dies der Fall ist, wird im Block 72 die Phasenlage pn der Einlassnockenwelle 38 verstellt. Während der Verstellung 72 wird im Block 73 geprüft, ob beim aktuellen Betriebspunkt der Brennkraftmaschine 10 bei der eingestellten Phasenlage pn die Luftfüllung rl der Hubkurve H1 gleich der Luftfüllung rl der Hubkurve H2 ist. Ist dem so, wird im Block 74 von der einen Hubkurve auf die andere Hubkurve umgeschaltet. Das Verfahren endet im Block 76.

Es versteht sich, dass die Phasenlage der Einlassnockenwelle 38, bei der beim aktuellen Betriebspunkt der Brennkraftmaschine 10 die Luftfüllungen rl der beiden Hubkurven H1 und H2 gleich sind, auch direkt aus einem oder mehreren Kennfeldern ermittelt und so die entsprechende Phasenlage sofort angefahren werden könnte.

## Patentansprüche

1. Verfahren zum Betreiben einer Brennkraftmaschine (10) mit mindestens einem Einlassventil (14), dessen Betrieb mindestens durch die Parameter Öffnungswinkel, Schließwinkel, Ventilhubkurve (H1, H2), und Phasenlage (pn) der Ventilhubkurve (H1, H2) beschrieben werden kann, und bei dem mindestens einer (pn) der Parameter kontinuierlich verstellt und ein ande rer Parameter (H1, H2) stufenweise geschaltet werden kann, wobei vor einer Umschaltung (74) des stufenweise schaltbaren Parameters (H1, H2) der kontinuierlich verstellbare Parameter (pn) so eingestellt wird (72), dass sich beim Umschalten (74) des stufenweise schaltbaren Parameters (H1, H2) mindestens eine Zustandsgröße (rl) der Verbrennung eines dem Einlassventil (14) zugeordneten Brennraums (12) nicht oder nicht wesentlich ändert, wobei es sich bei dem stufenweise schaltbaren Parameter um die Ventilhubkurve, (H1, H2) handelt, derart, dass sich die unterschiedlichen Ventilhubkurven (H1, H2) mindestens durch den jeweiligen Maximalhub unterscheiden, und wobei es sich bei dem kontinuierlich verstellbaren Parameter um die Phasenlage (pn) der Ventilhubkurven (H1, H2) gegenüber dem Kurbelwellenwinkel handelt, **dadurch gekennzeichnet, dass** zum Zeitpunkt der Umschaltung (74) der Ventilhubkurve (H1, H2) keine oder keine wesentliche Ventilüberschneidung zwischen dem Einlassventil (14) und einem Auslassventil (26) vorliegt.

2. Verfahren nach Anspruch 1, **dadurch gekennzeichnet, dass** die Zustandsgröße der Verbrennung eine Frischluftfüllung (rl) und/oder einen Verbrennungsschwerpunkt umfasst.

3. Verfahren nach einem der vorhergehenden Ansprüche, **dadurch gekennzeichnet, dass** der Schließwinkel des Einlassventils (14) bei gleicher Phasenlage (pn) bei allen Ventilhubkurven (H1, H2) in etwa gleich ist und die Umschaltung (74) der Ventilhubkurve (H1, H2) nur bei niedrigen und/oder mittleren Drehzahlen erfolgt.

4. Verfahren nach einem der vorhergehenden Ansprüche 3 bis 5, **dadurch gekennzeichnet, dass** eine Ventilhubkurve (H2) mit kleinerem Maximalhub in etwa mittig innerhalb einer Ventilhubkurve (H1) mit größerem Maximalhub angeordnet ist, und dass die Umschaltung (74) von einer Ventilhubkurve (H1, H2) zu einer anderen (H2, H1) bei einer späten Phasenlage (pn1) der Ventilhubkurven (H1, H2) erfolgt, bei der mit beiden Ventilhubkurven (H1, H2) in etwa die gleiche Frischluftfüllung (rl) im Brennraum (12) erreicht wird.

5. Verfahren nach einem der vorhergehenden Ansprüche, **dadurch gekennzeichnet, dass** eine Mehrzahl von Einlassventilen pro Brennraum vorhanden ist und eine der Ventilhubkurven mindestens eines dieser Einlassventile den maximalen Hub Null aufweist.

6. Computerprogramm, **dadurch gekennzeichnet, dass** es zur Durchführung des Verfahrens nach einem der vorhergehenden Ansprüche geeignet ist, wenn es auf einem Computer ausgeführt wird.

7. Computerprogramm nach Anspruch 6, **dadurch gekennzeichnet, dass** es auf einem Speicher, insbesondere auf einem Flash-Memory, abgespeichert ist.

8. Steuer- und/oder Regelgerät (50) zum Betreiben einer Brennkraftmaschine, **dadurch gekennzeichnet, dass** es einen Speicher umfasst, auf dem ein Computerprogramm nach einem der Ansprüche 6 oder 7 abgespeichert ist.

9. Brennkraftmaschine (10), **dadurch gekennzeichnet, dass** sie ein Steuer-und/oder Regelgerät (50) nach Anspruch 8 umfasst.

## Claims

1. Method for operating an internal combustion engine (10) having at least one inlet valve (14) whose operation can be described at least by means of the parameters of the opening angle, closing angle, valve stroke curve (H1, H2) and phase angle (pn) of the valve stroke curve (H1, H2), and in which at least one (pn) of the parameters can be adjusted continuously, and another parameter (H1, H2) can be switched incrementally, wherein, before switching (74) of the parameter (H1, H2) which can be switched incrementally, the parameter (pn) which can be adjusted continuously is set (72) in such a way that when the parameter (H1, H2) which can be switched incrementally is switched (74) at least one state variable (rl) of the combustion of a combustion chamber (12) which is assigned to the inlet valve (14) does not change or does not change significantly, wherein the parameter which can be switched incrementally is the valve stroke curve (H1, H2) in such a way that the different valve stroke curves (H1, H2) differ at least in the respective maximum stroke, and wherein the continuously adjustable parameter is the phase angle (pn) of the valve stroke curves (H1, H2) with respect to the crankshaft angle, **characterized in that** at the time of the switching (74) of the valve stroke curve (H1, H2) there is no valve overlap, or no significant valve overlap, between the inlet valve (14) and an outlet valve (26).

2. Method according to Claim 1, **characterized in that** the state variable of the combustion comprises a fresh air charge (rl) and/or a combustion centre of gravity.

3. Method according to one of the preceding claims, **characterized in that** the closing angle of the inlet valve (14) is approximately the same given the same phase angle (pn) on all the valve stroke curves (H1, H2), and the switching (74) of the valve stroke curve (H1, H2) takes place only at low and/or medium rotational speeds.

4. Method according to one of the preceding Claims 3 to 5, **characterized in that** a valve stroke curve (H2) with a relatively small maximum stroke is arranged approximately centrally within a valve stroke curve (H1) with a relatively large maximum stroke and **in that** the switching (74) from one valve stroke curve (H1, H2) to another (H2, H1) occurs at a later phase angle (pn) of the valve stroke curves (H1, H2) at which approximately the same fresh air charge (rl) is brought about in the combustion chamber (12) with both valve stroke curves (H1, H2).

5. Method according to one of the preceding claims, **characterized in that** a majority of inlet valves is provided per combustion chamber and one of the valve stroke curves of at least one of these inlet valves has the maximum stroke zero.

6. Computer program, **characterized in that** it is suitable for carrying out the method according to one of the preceding claims if it is run on a computer.

7. Computer program according to Claim 6, **characterized in that** it is stored on a memory, in particular on a flash memory.

8. Open-loop and/or closed-loop control device (50) for operating an internal combustion engine, **characterized in that** it comprises a memory on which a computer program according to one of Claims 6 or 7 is stored.

9. Internal combustion engine (10), **characterized in that** it comprises an open-loop and/or closed-loop control device (50) according to Claim 8.

## Revendications

1. Procédé de gestion d'un moteur à combustion interne (10) comportant au moins une soupape d'admission (14) dont le fonctionnement se décrit au moins par les paramètres suivants, angle d'ouverture, angle de fermeture, courbe de levée de soupape (H1, H2) et phase (pn) de la courbe de levée de soupape (H1, H2) et selon lequel on règle en continu au moins l'un (pn) des paramètres et on commute par palier un autre paramètre (H1, H2),
avant une commutation (74) du paramètre qui se commute par palier (H1, H2), on règle (72) le paramètre (pn) réglable en continu pour qu'à la commutation (74) du paramètre commuté par palier (H1, H2), au moins une grandeur d'état (rl) de la combustion d'une chambre de combustion (12) associée à la soupape d'admission (14) ne change pas ou ne change pas de manière importante, et
le paramètre commuté par palier est la courbe de la levée de soupape (H1, H2) de façon que les différentes courbes de levée de soupape (H1, H2) se coupent au moins pour la levée maximale respective, et
le paramètre réglable en continu est la phase (pn) des courbes de levée de soupape (H1, H2) par rapport à l'angle de vilebrequin,
**caractérisé en ce qu'**
à l'instant de la commutation (74) de la courbe de levée de soupape (H1, H2), il n'y a pas de chevauchement de soupape ou pratiquement pas de chevauchement de soupape entre la soupape d'admission (14) et une soupape d'échappement (26).

2. Procédé selon la revendication 1,
**caractérisé en ce que**
la grandeur d'état de la combustion comprend un remplissage d'air frais (rl) et/ou un centre de gravité de combustion.

3. Procédé selon les revendications précédentes,
**caractérisé en ce que**
pour la même phase (pn) pour toutes les courbes de levée de soupape (H1, H2), l'angle de fermeture de la soupape d'admission (14) est sensiblement le même et la commutation (74) de la courbe de levée de soupape (H1, H2) ne se fait qu'à des vitesses de rotation faibles et/ou moyennes.

4. Procédé selon les revendications 3 à 5
**caractérisé en ce qu'**
une courbe de levée de soupape (H2) à course maximale petite est située sensiblement au milieu d'une courbe de levée de soupape (H1) de levée maximale plus grande, et
la commutation (74) entre une courbe de levée de soupape (H1, H2) vers une autre courbe de levée de soupape (H2, H1) se fait pour une phase en retard (pn1) des courbes de levée de soupape (H1, H2) pour laquelle les deux courbes de levée de soupape (H1, H2) permettent d'obtenir sensiblement le même remplissage d'air frais (rl) de la chambre de combustion (12).

5. Procédé selon les revendications précédentes,
**caractérisé en ce que**
chaque chambre de combustion comporte plusieurs soupapes d'admission et l'une des courbes de levée de soupape d'au moins l'une de ces soupapes d'admission présente une levée maximale égale à zéro.

6. Programme d'ordinateur en ce qu'il est destiné à exécuter le procédé selon les revendications précédentes lorsque le procédé est traité par un ordinateur.

7. Programme d'ordinateur selon la revendication 6,
**caractérisé en ce qu'**
il est enregistré dans une mémoire notamment une mémoire Flash.

8. Appareil de commande et/ou de régulation (50) pour gérer un moteur à combustion interne,
**caractérisé en ce qu'**
il comprend une mémoire dans laquelle est enregistré un programme d'ordinateur selon la revendication 6 ou 7.

9. Moteur à combustion interne (10),
**caractérisé en ce qu'**
il comprend un appareil de commande et/ou de régulation (50) selon la revendication (8).
